(19)

Europäisches Patentamt
European Patent Office
Office européen des brevets

(11)  **EP 2 339 301 A1**

(12)  # EUROPEAN PATENT APPLICATION

(43) Date of publication:
**29.06.2011 Bulletin 2011/26**

(51) Int Cl.:
***G01F 1/66*** (2006.01)

(21) Application number: **09180619.0**

(22) Date of filing: **23.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **KAMSTRUP A/S**
**8660 Skanderborg (DK)**

(72) Inventors:
• **Sørensen, Jens Lykke**
  **DK-8330, Beder (DK)**
• **Nielsen, Søren Tønnes**
  **DK-8355, Solbjerg (DK)**

(74) Representative: **Plougmann & Vingtoft A/S**
**Sundkrogsgade 9**
**P.O. Box 831**
**2100 Copenhagen Ø (DK)**

(54)  **Ultrasonic flowmeter with simultaneously driven ultrasonic transducers**

(57)    The present invention relates to consumption meter in the form of an ultrasonic transit time flowmeter for measuring a flow value representing a consumed quantity. The generator circuit and the ultrasonic transducers of the flowmeter are arranged so that the drive signals simultaneous drive each of the at least two ultrasonic transducers. In embodiments, detection of the flow may be based on frequency mixing, such as homodyne detection.

FIG. 3

**Description**

FIELD OF THE INVENTION

The present invention relates to a flowmeter for measuring a flow value. In particular the invention relates to an ultrasonic transit time flowmeter for measuring a flow value representing a consumed quantity.

BACKGROUND OF THE INVENTION

A consumption meter converts a measured quantity value to a consumed quantity, such as a consumption of hot or cold water. In a typical ultrasonic flowmeter, ultrasonic transducers for generating and detecting ultrasonic signals are placed so that the generated signals can propagate through the medium flow. In a typical determination of a fluid flow, ultrasonic signals from two ultrasonic transducers are emitted in counter-propagating directions. Signals propagating downstream propagate faster than signals propagating upstream, and the flow rate can be determined by measuring the difference in arrival time of the emitted signals. The flowmeter comprises electronic circuitry connected to the transducers for driving the transducers, often referred to as generator electronics, as well as electronic circuitry connected to the transducers for receiving the detected transducer signals, often referred to as receiver electronics. The transducers are normally switched for periodic alternate operation, by periodically interchanging the electrical connection to the generator electronics.

In order to provide a flowmeter capable of measuring flow rates with a very high precision, it is important to eliminate all measured differences between the oppositely propagating ultrasonic signals which are not related to the medium flow itself. One important source of artificial time delays is imperfect electronic components. One paramount condition for not being influenced by such artificial time delays is a very strict compliance to the principle of reciprocity of the electronic arrangement of the flowmeter.

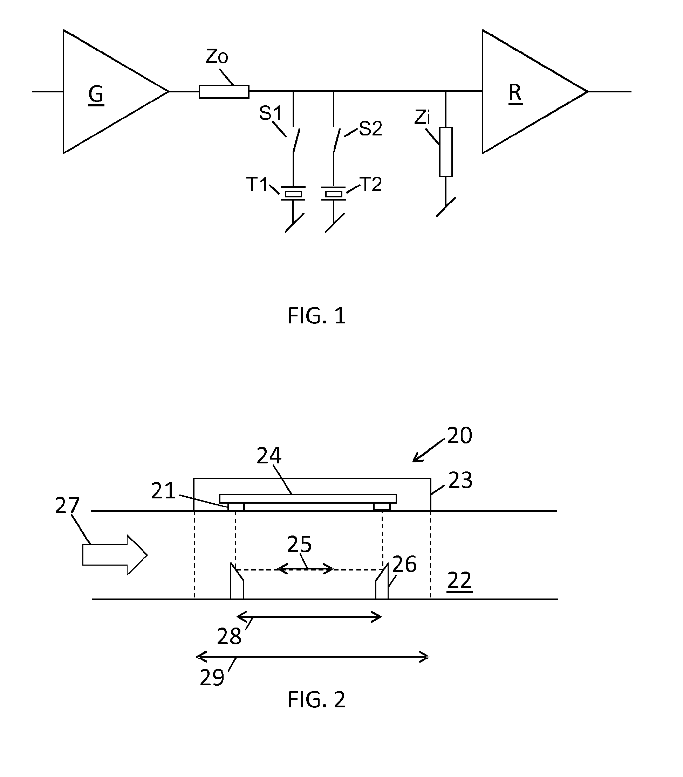

An example of an ultrasonic flowmeter which is reciprocal to a very high degree is disclosed in EP 0 846 936. Further reference to the electronic arrangement of this flowmeter is provided in connection with FIG. 1.

SUMMARY OF THE INVENTION

The inventors of the present invention have realized that while a number flowmeter designs use switched transducers, the switches do introduce problems. Fast, cheap and reliable switches are semiconductor-based, and small nonlinearities are inherent in these, which results in zero point offsets in the flow metering process due to loss of reciprocity. Moreover, due to efficient conversion of electric energy into acoustic energy, the transducers are usually designed as resonant devices with a quality factor in the 10-100 range. As a result, transients caused by changing the state of the switches will usually induce oscillations in the transducers. These oscillations must have decayed by the time the receiving transducer records the ultrasonic wave. If this is not the case, instabilities in the flow measurements will occur. Consequently a certain distance must be covered by the ultrasonic wave inside the flowmeter in order to give the switch/transducer complex time to settle down, this hinder among other things the fabrication of small flowmeters. In general it would be advantageous to provide a consumption meter which simplifies the electronic design, which nevertheless is reciprocal, or at least expose a very high degree of reciprocity, in the overall electrical design. Moreover, it is an object of the present invention to provide an alternative to the prior art.
In a first aspect of the invention, there is provided an ultrasonic flowmeter comprising:

- at least two ultrasonic transducers arranged for transmission and receipt of ultrasonic signals in opposite directions across a measuring distance;
- a generator circuit for generating drive signals to the at least two ultrasonic transducers, the generator circuit having a generator output; and
- a receiver circuit for receiving signals from the at least two ultrasonic transducers, the receiver circuit having a receiver input, the generator output being connected to the receiver input by an electric signal path;

wherein the generator circuit and the ultrasonic transducers are arranged so that the drive signals simultaneous drive each of the at least two ultrasonic transducers.
The flowmeter may in embodiments be part of a consumption meter for measuring a medium flow through a flow passage connected to the flowmeter. The consumption meter may be used for measuring a consumed quantity of the medium, such as a consumed quantity of hot or cold water, however the consumption of any medium measurable with a consumption meter in accordance with embodiments of the present invention can be measured. The consumption meter may be a legal meter, i.e. a meter which is subdued to regulatory demands. Such regulatory demands may be demands to the precision of the measurements.

It is important, that the flowmeter electronics is reciprocal to a very high degree. The flowmeter in accordance with embodiments of the present invention comprises separate but electrically connected generator and receiver electronics. In a flowmeter of this type, key elements in achieving a high degree of reciprocity is the connection of the generator output and the receiver input by the electric signal path, so that only a single driver circuit and a single receiver circuit are present, in combination with a careful control of the output impedance of the driver circuit and the input impedance of the receiver circuit. Thus the transducers share generator circuit and receiver circuit. In embodiments, the electric signal path is a single path. The electric path may be unbroken. The electric path may be un-switched, i.e. no switches are placed in the path between the generator output and the receiver input. Electronic components may be present in the electric paths. However, such components should carefully be selected to expose a high degree of linearity.

By providing a flowmeter where the generator circuit and the ultrasonic transducers are arranged so that the drive signals simultaneous drive each of the at least two ultrasonic transducers, a simplified flowmeter is provided. A result of this operational principle is that the ultrasonic transducers simultaneously transmit the ultrasonic signal across the measuring distance. The detailed control and associated components related to the control, of when and if the transducers are connected to the generator can be avoided. By omitting electronic components in the signal path between the input of the transducers and the output of the generator, components which would otherwise jeopardize the overall reciprocity of the electronic circuit are omitted. Moreover, since the transducers are operated simultaneously, any control electronic related to separate operation of the transducer are avoided. The control electronic may therefore be implemented by a non application specific integrated circuit, i.e. by electronic components which need only little specific accommodation to the dedicated use. Normally, a dedicated control application specific integrated circuit (ASIC) is used to control the operation of the generator circuit, the transducer and the receiver. This so-called flow ASIC is one of the costly components, In embodiments of the present invention it can be omitted, or only a simple flow ASIC may be needed in order to operate the generator and/or the transducers.

By operating the transducers simultaneous, no requirement to a time delay to accommodate any transients of the transducers from the switching, is present and the measuring section can be made very short. Moreover, since the flow is sampled simultaneously up- and downstream, the flowmeter is robust to changes in flow-patterns. Flowmeters which first measure upstream and subsequently measure downstream (or vice versa) are sensitive to flow-pattern variations between the measurements.

In the present context, the opposite directions are typically two opposite directions. However, also e.g. a triangular setup is contemplated, as well as or other setups where a component of the vectors representative of the ultrasonic signal propagation are in opposite directions.

In an embodiment, the generator circuit and the ultrasonic transducers are arranged to be electrical connected without use of switches. By not using switches, the electronic layout is simplified which renders the flowmeter more cost efficient and robust since components are avoided. Moreover, switches are a major source of nonlinearities observed in flowmeters. Such problems are eliminated by avoiding the use of switches.

By operating the transducers simultaneously, the upstream and downstream signals are mixed to provide a composite signal, and information related to the flow velocity need to be deduced from the mixed signal or composite signal. Embodiments of receiving circuits suitable for determining the flow from the composite signal are disclosed in the following.

In an advantageous embodiment, the determination of the flow is based on frequency mixing performed in the receiver circuit. By determining the flow from a frequency mixed signal, the detection is based on frequency detection. An advantage of frequency detection is that problems relating to ultrasound signals reflected e.g. from adjacent flow passage walls which interfere with the directly propagating signals may be dealt with by frequency filtering, since such echo signals are shifted to higher frequencies as they arrive later than directly propagating signals. Many flowmeter of the prior art are based on determining the flow from a time detection of differences in arrival time based on detecting phase shifts of the signals related to the oppositely propagating waves. By basing the flow determination on frequency detection an alternative approach is used.

In advantageous embodiments, the determination of the flow is based on a homodyne or a heterodyne detection of the signal received by the receiver circuit. In embodiments, homodyne or a heterodyne detection is used to separate frequency components which comprise the flow or a parameter related to the flow, from the frequency mixed signal.

In advantageous embodiments, the mixed signal may be furthermore bandpass filtered prior to determination of the flow in order to separate relevant frequencies from the signal. The bandpass filtering may comprise low pass filtering, high pass filtering, notch filtering, etc., as generally understood by the term bandpass filtering.

In advantageous embodiments, the generator circuit is adapted to output a drive signal with time dependent frequency, w(t). The specific form of time variation may be selected in accordance with the overall design. In a particular example, the frequency is on the form: $w(t) = \omega_0 + \alpha t$; where $\omega_0$ is a constant frequency and $\alpha$ is a constant. In other embodiments, the signal is phase/frequency modulated or amplitude modulated.

A particular advantage of the embodiments of the present invention is that the measuring section may be short, and consequently the entire flowmeter may be made compact. In embodiments, the measuring distance is between 2 mm and 25 mm. The specific distance is dependent on the specific design choice. Especially, flowmeters with a measuring distance between 2 mm and 10 mm, or even between 2 mm and 5 mm may be considered to be flowmeters with a short measuring distance, however also flowmeters with longer measuring distances may advantageously be used in connection with embodiments of the present invention, such as flowmeters with a measuring distance of 50 mm or even 75 mm. The distance of the measuring section may in embodiments be selected to be between 1 wavelength of the ultrasonic radiation and 50 wavelengths of the ultrasonic radiation, such as in the range 3 to 40 wavelengths, such as in the range 5 to 25 wavelength, such as in the range 10 to 15 wavelengths.. The frequency of the ultrasonic radiation is typically between 200 kHz and 5 MHz, such as 500 KHz, 1 MHz or 2 MHz.

In a second aspect of the invention a method of operating an ultrasonic flowmeter is presented. The flowmeter may be a flowmeter according to the first aspect of the invention. The method comprises generating drive signals from the generator circuit to simultaneous drive each of the at least two ultrasonic transducers.

In general the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE FIGURES

Embodiments of the invention will be described, by way of example only, with reference to the drawings, in which

FIG. 1 schematically illustrates an example of an electronic diagram for an ultrasonic flowmeter of the prior art;

FIG. 2 schematically illustrates a flowmeter mounted in a measuring tube;

FIG. 3 illustrates a diagram of electronic components of an ultrasonic flowmeter;

FIG. 4 illustrates a diagram of electronic components of an ultrasonic flowmeter suitable for homodyne detection;

FIG. 5 illustrates the general form of a signal, $Q_F$, from which the flow velocity can be determined; and

FIG. 6 illustrates general steps performed in an embodiment of operating a flowmeter in order to determine the flow.

DESCRIPTION OF EMBODIMENTS

FIG. 1 schematically illustrates an example of an electronic diagram for an ultrasonic follow meter generally disclosed in EP 0 846 936, the circuit disclosed therein is reciprocal to a very high degree. The diagram illustrates a generator G having output impedance $Z_0$, and switches S1 and S2 for enabling and preventing electrical connection to the transducers T1 and T2. The generator is directly electrically connected to a receiver R having input impedance $Z_i$. For a setup of this type, by operating the generator to alternatively output a driving signal to the transducer in question without altering the output impedance $Z_0$ between the two states (i.e. one state with generator output and one state without), the impedance seen from the transducer is the same independently of whether the transducers T1 and T2 act as transmitter or receiver of ultrasonic signals, and no demands are put on the receiving and the transmitting circuits in relation to the output and input impedances, respectively.

FIG. 2 schematically illustrates a flowmeter 20 mounted in a measuring tube 22 for determining a consumed flow 27, or a value representing a consumed flow. The flowmeter 20 comprises a housing 23 encapsulating the electronic circuitry 24, typically in the form of one or more PCB, with such components attached as battery, antenna and display (not shown). The electronic circuitry 24 is in electrical connection with the two transducers 21 emitting and detecting oppositely propagating ultrasonic signals 25. The ultrasonic signals 25 are directed by use of protruding mirrors 26. Other types of flowmeters are also available in the art, such as flowmeters with directly opposing transducers which do not use mirrors to direct the ultrasonic radiation. Embodiments of the present invention allow very compact flowmeters, since the measuring distance 28 may be made very small. In an embodiment the measuring distance 28 may be 5 mm and the size 29 of the entire flowmeter 20 mm. The specific distances may however be selected in accordance with a number of considerations, such as specific design considerations, precision considerations, operational considerations, etc. The flowmeter may further comprise or be connected to additional components, such as a pair of temperature sensors, one for measuring the temperature of the medium of the inflow and one for measuring the temperature of the medium of the outflow. From the temperature difference a consumed energy quantity can be calculated. The medium may typically be water or water with additives. However the flow of other types of media may also be determined by use of a flowmeter in accordance with embodiments of the present invention.

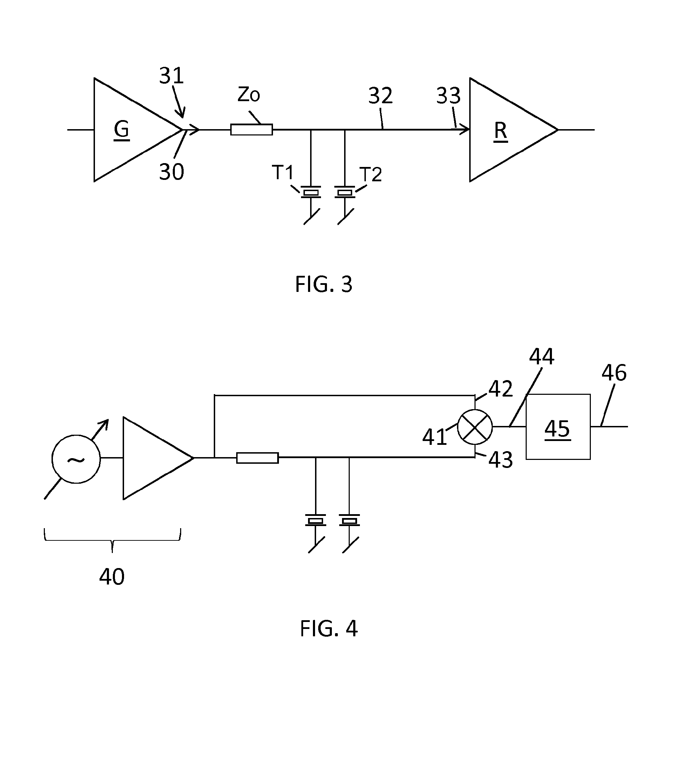

FIG. 3 illustrates a diagram of electronic components of an ultrasonic flowmeter in accordance with embodiments of the present invention. The figure illustrates a generator circuit G for generating drive signal 30 outputted at a generator output 31 to two piezoelectric ultrasonic transducers T1, T2. The transducers are arranged for transmission and reception of the ultrasonic signals in opposite directions across the measuring distance, as illustrated in FIG. 2. The generator circuit and the ultrasonic transducers are arranged so that any generated drive signals will cause each of the ultrasonic transducers to simultaneously transmit the ultrasonic signal across the measuring distance. In particular, the transducers are directly connected a signal path 32 without the use of switches. The signal path further illustrates an output impedance $Z_0$ which is used in connection with ensuring a constant or substantially constant output impedance of the generator circuit. While the output impedance is illustrated to be a separate component it is typically perceived as a part of the generator circuit. FIG. 3 further illustrates a receiver circuit R for receiving signals 33 via the signal path 32. In embodiments, the signal path is a direct un-switched electrical path. Apart from the transducers, the circuit is linear to a very high degree. At realistic signal levels, the transducers can be assumed to be linear to a very high degree as well. As a result, the entire circuit can be considered to be reciprocal to a very high degree. An important effect of this is that the signal analysis can be performed by use of superposition.

In an embodiment, the transducers are driven by use of harmonic drive signals with a frequency component $\omega$. By generation of a drive signal for a certain time period, the transducers will simultaneously transform the electrical energy into acoustic energy travelling through the flowmeter. After traversing the measuring distance, the ultrasonic waves are recorded at the transducers opposite to the respective transmitters. Thus each transducer records a signal component, $s_1$ and $s_2$, which may be of the form:

$$s_1 = \frac{A(t)}{2}\exp[-i(\omega t - k_+ L - \theta)],$$

$$s_2 = \frac{A(t)}{2}\exp[-i(\omega t - k_- L - \theta)]$$

where $\theta$ is the flow independent phase shift arising from electronics, etc., L is the physical distance travelled by the ultrasonic waves inside the flowmeter and $k_\pm$ are the wave numbers for the waves travelling downstream and upstream, respectively. The latter are given by:

$$k_\pm = \frac{\omega}{c \pm v} \cong k(1 \mp \beta)$$

where c is the phase velocity of the wave, $v$ is the flow velocity, k=w/c and β=$v$/c. The above approximation is valid for β<<1. In the event that the transmission is of longer duration, i.e. the signals are received at the other transducer and transmitted to the receiver circuit while the receiver circuit also receives a signal component, $s_0$, travelling directly from the signal generator to the receiver via the signal path, the signal components $s_1$ and $s_2$ will be superposed with a signal component, $s_0$. This component may be expressed as

$$s_0 = B(t)\exp[-i(\omega t - \chi)]$$

with x being the electronic phase shift picked up along the signal path. The resulting received signal is a composite signal obtained by superposing $s_1$, $s_2$ and $s_0$. Thus depending on whether only $s_1$ and $s_2$ are received or also $s_0$ is received, the composite signal comprises two or three components. Below, the situation with three signal components is elaborated upon in further detail.

The composite signal is:

$$S = s_0 + s_1 + s_2 = B(t)\exp[-i(\omega t - \chi)] + A(t)cos\phi\exp[-i(\omega t - kL - \theta)],$$

where the flow dependent phase is found to be $\phi = \beta KL$

FIG. 4 illustrates a diagram of electronic components of an ultrasonic flowmeter in accordance with an embodiment suitable for homodyne detection of the flow dependent phase, $\phi$.

The generator circuit 40 comprises a signal source for providing an input signal with a time varying frequency to an amplifier for outputting the driving signal. In an embodiment, the frequency of the drive signals is time dependent and on the form: $\omega(t) = \omega_0 + \alpha t$; where $\omega_0$ is a constant frequency, $\alpha$ is a constant and $t \in [0 ; \tau]$, $\tau$ being the duration of the drive signal. The invention is not limited to this specific type of time varying frequency, a number of different time-varying frequencies may be used. By proper selection of $\alpha$ the sensitivity to the flow can be adjusted.

The homodyne detection is performed by mixing, at a frequency mixing circuit 41, the generated signal, R 42, and the signal, $S$ 43, received from the at least two ultrasonic transducers to form a mixed signal Q 44.

The mixing may be performed digitally, by means of a radio frequency mixer, or by any suitable mixing means.

The signals $s_1$ and $s_2$ can be expressed in terms of time delays, $T = L/c$ $T_\pm = T(1 \pm \beta)$ associated with the ultrasound propagation through the flowmeter and $T_{e1}$ and $T_{e2}$ which are electronic delays. In terms of these quantities, with constant $A(t)$ and $B(t)$, the signals $s_0$, $s_1$ and $s_2$ can be expressed as:

$$s_0 = B \exp[-i\omega(t - T_{e2})t],$$

$$s_1 = \frac{A}{2} \exp[-i\omega(t - T_- - T_{e1})t],$$

$$s_2 = \frac{A}{2} \exp[-i\omega(t - T_+ - T_{e1})t]$$

By specifying all time delays relative to the local oscillator at the mixer, the signal R is expressed as:

$$R = C \exp[-i\omega(t)t],$$

The homodyne process produces mixed frequency components, as expressed in the mixed signal Q:

$$Q = \mathrm{Re}\{S\}\mathrm{Re}\{R\}$$

From the calculation of Q the following six frequencies can be identified:

$$\omega_1 = 2\omega_0 + \alpha(2t - T_{e2}); \ \omega_2 = 2\omega_0 + \alpha(2t - T_+ - T_{e1}); \ \omega_3 = 2\omega_0 + \alpha(2t - T_- - T_{e1});$$

$$\omega_4 = \alpha T_{e2}; \ \omega_5 = \alpha(T_+ - T_{e1}); \ \omega_6 = \alpha(T_- - T_{e1})$$

By proper design of the flowmeter, the measurement can be designed such that $\omega_{1,2,3}$ are much higher than the remaining frequencies. In a real situation, $T_\pm \gg T_{e1,e2}$ and a band-pass filter 45 in the form of a notch filter can thus be utilized on the mixed signal to separate $\omega_5$ and $\omega_6$ from the other frequencies. In an alternative embodiment, a low-pass filter may be applied instead of a band-pass filter, to separate the frequency components $\omega_{4,5,6}$ and appropriate processing could be used to determine the flow velocity.

By using a band-pass filter 45 in the form of a notch filter, a filtered signal $Q_F$ 46 can be obtained:

$$Q_F = \frac{AC}{4}\left(\cos[\alpha(T_+ + T_{e1})t] + \cos[\alpha(T_- + T_{e1})t]\right) = \frac{AC}{2}\cos[\alpha(T + T_{e1})t]\cos[\alpha\beta Tt]$$

In practice $\beta \ll 1$, and $Q_F$ will be a signal having a fast oscillation with frequency $\Omega_1 = \alpha(T + T_{e1})$ and a slower oscillation at $\Omega_2 = \alpha\beta T$.

The mixing circuit and filter can be implemented digitally by a suitably programmed processing means.

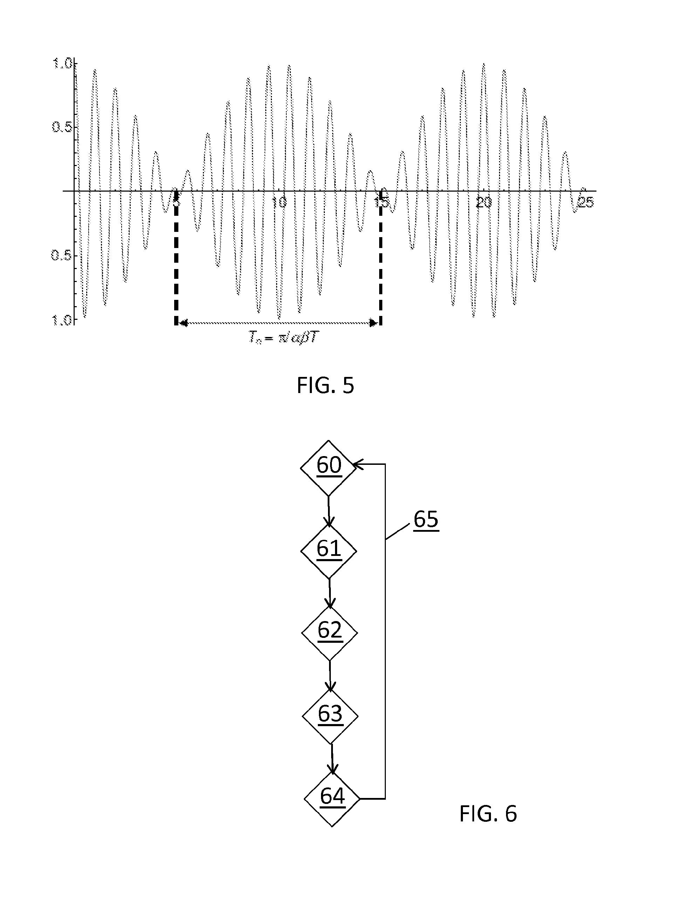

FIG. 5 illustrates the general form of $Q_F$ as a function of time (expressed as: $\Omega_1 t/2\pi$). The time between two notes, $T_n$ is equal to $\pi/\alpha\beta T$.

For a known electronic delay, $T_{e1}$, and frequency derivative, $\alpha$, the signal, $Q_F$, contains all the information required to establish the parameter $\beta$ and thereby perform a measurement of the flow velocity. The actual calculations may be performed by a microprocessor connected to the receiver circuit.

The flow velocity can be determined by recording the time $T_n$ together with the frequency $\Omega_1$. The flow velocity, v, can be calculated as:

$$v = \frac{\pi c}{\alpha T T_n} = \frac{\pi c}{(\Omega_1 - \alpha T_{e1})T_n} = \frac{\pi \alpha L}{(\Omega_1 - \alpha T_{e1})^2 T_n}$$

The part, $\alpha T_{e1}$, can be eliminated by adding a variable digital delay in the local oscillator path and vary $\alpha$ for constant flow velocities. Also, an empirical correction constant can be used to achieve the same result.

In the event multiple acoustic reflections are present in the flowmeter, such acoustic reflections wound result in higher frequency components than the one mentioned above as a result of the larger time delay. These reflections may thus be removed by the frequency filtering of the mixed signal.

FIG. 6 illustrates general steps performed in an embodiment of operating a flowmeter in order to determine the flow.

A measurement is performed by first generating drive signals 60 from the generator circuit to simultaneous drive each of the at least two ultrasonic transducers.

The signal received from the transducers is frequency mixed 61 in the receiver circuit. The received signal is thus a composite signal comprising contributions from each of the transducers, possibly from the drive signal via a directly transmission from the generator to the receiver, as well as additionally generated frequency components from the frequency mixing.

The signal is frequency filtered 62 to separate the relevant frequency region of the received signal.

The flow velocity is extracted 63 from signal treatment of the filtered signal. The flow velocity is subsequently converted to a consumed quantify 64 of the flow medium.

The general steps are repeated 65 to continuously monitoring the consumed quantity.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1.  Ultrasonic flowmeter comprising:

    - at least two ultrasonic transducers arranged for transmission and receipt of ultrasonic signals in opposite directions across a measuring distance;
    - a generator circuit for generating drive signals to the at least two ultrasonic transducers, the generator circuit having a generator output; and
    - a receiver circuit for receiving signals from the at least two ultrasonic transducers, the receiver circuit having a receiver input, the generator output being connected to the receiver input by an electric signal path;
    wherein the generator circuit and the ultrasonic transducers are arranged so that the drive signals simultaneous drive each of the at least two ultrasonic transducers.

2.  The ultrasonic flowmeter according to claim 1, wherein the generator circuit and the ultrasonic transducers are arranged to be electrical connected without use of switches.

3.  The ultrasonic flowmeter according to any of the preceding claims, wherein a determination of the flow is based on a composite signal received by the receiver circuit, and wherein the composite signal comprises at least the two components related to each of the signals received by the ultrasonic transducers.

4.  The ultrasonic flowmeter according to claim 3, wherein the determination of the flow is based on a composite signal received by the receiver circuit, and wherein the composite signal further comprises one component transmitted directly from the generator circuit to the receiver circuit via the signal path.

5.  The ultrasonic flowmeter according to any of the preceding claims, wherein a determination of the flow is based on frequency mixing performed in the receiver circuit.

6.  The ultrasonic flowmeter according to any of the preceding claims, wherein a determination of the flow is based on a homodyne or a heterodyne detection of the signal received by the receiver circuit.

7.  The ultrasonic flowmeter according to claim 5 or 6, wherein the ultrasonic flowmeter further comprises a frequency mixing circuit, the mixing circuit generates a mixed signal being a mix of the generated signal and the signal received from the at least two ultrasonic transducers, and wherein a determination of the flow is based on the mixed signal.

8.  The ultrasonic flowmeter according to any of the preceding claims, wherein the mixed signal is furthermore bandpass filtered prior to determination of the flow.

9.  The ultrasonic flowmeter according to any of the preceding claims, wherein the frequency of the drive signals is time dependent.

10. The ultrasonic flowmeter according to any of the preceding claims, wherein the measuring distance is between 2 mm and 75 mm.

11. The ultrasonic flowmeter according to any of the preceding claims, wherein the measuring distance is between 1 wavelength of the ultrasonic radiation and 50 wavelengths of the ultrasonic radiation.

12. A consumption meter for measuring a medium flow through a flow passage, the consumption meter comprising an ultrasonic flowmeter according to any of the preceding claims and a flow passage, the consumption meter being connected to the flow passage.

13. Method of operating an ultrasonic flowmeter, the flowmeter comprises:

    - at least two ultrasonic transducers arranged for transmission and receipt of ultrasonic signals in opposite directions across a measuring distance;
    - a generator circuit for generating drive signals to the at least two ultrasonic transducers, the generator circuit having a generator output; and
    - a receiver circuit for receiving signals from the at least two ultrasonic transducers, the receiver circuit having a receiver input, the generator output being connected to the receiver input by an electric signal path;

the method comprises:
- generate drive signals from the generator circuit to simultaneous drive each of the at least two ultrasonic transducers.

14. The method according to claim 13, wherein the signal received from the transducers is frequency mixed.

15. The method according to claim 13 or 14, wherein a determination of the flow is based on a homodyne or a heterodyne detection of the signal received by the receiver circuit.

16. The method according to any of the claims 13-15, wherein the frequency of the drive signals is time dependent.

FIG. 1

FIG. 2

FIG. 3

FIG. 4

FIG. 5

FIG. 6

Europäisches
Patentamt

European
Patent Office

Office européen
des brevets

**EUROPEAN SEARCH REPORT**

Application Number

EP 09 18 0619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/015107 A1 (FELLER MURRAY F [US] FELLER MURRAY [US]) 23 August 2001 (2001-08-23) * paragraph [0058]; figure 4 * * paragraph [0062] - paragraph [0065] * * paragraph [0070] * ----- | 1-16 | INV. G01F1/66 |
| X | EP 0 496 953 A1 (LANDIS & GYR BETRIEBS AG [CH] LANDIS & GYR TECH INNOVAT [CH]) 5 August 1992 (1992-08-05) * column 1, line 4 - line 5; figure * * * column 1, line 46 - column 2, line 19 * * column 4, line 25 - line 48 * ----- | 1,9,12, 13,16 | |
| A | WO 80/00876 A1 (RHEOMETRON AG [NL]; YMKER L [NL]; HOOGENDIJK C [NL]) 1 May 1980 (1980-05-01) * page 5, line 10 - line 26 * ----- | 2 | |
| A | US 3 738 169 A (COURTY A) 12 June 1973 (1973-06-12) * column 3, line 59 - column 4, line 2 * ----- | 5-7,14, 15 | TECHNICAL FIELDS SEARCHED (IPC) G01F |

The present search report has been drawn up for all claims

| Place of search | Date of completion of the search | Examiner |
|---|---|---|
| The Hague | 10 June 2010 | Bourhis, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 18 0619

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2010

| Patent document cited in search report | | Publication date | Patent family member(s) | | Publication date |
|---|---|---|---|---|---|
| US 2001015107 | A1 | 23-08-2001 | NONE | | |
| EP 0496953 | A1 | 05-08-1992 | AT | 138735 T | 15-06-1996 |
| | | | DE | 59107864 D1 | 04-07-1996 |
| | | | DK | 0496953 T3 | 21-10-1996 |
| WO 8000876 | A1 | 01-05-1980 | DE | 2966272 D1 | 10-11-1983 |
| | | | EP | 0020537 A1 | 07-01-1981 |
| | | | JP | 2107025 U | 24-08-1990 |
| | | | JP | 3002819 Y2 | 25-01-1991 |
| | | | JP | 55500844 T | 23-10-1980 |
| | | | NL | 7810630 A | 29-04-1980 |
| | | | US | 4367654 A | 11-01-1983 |
| US 3738169 | A | 12-06-1973 | CA | 928417 A1 | 12-06-1973 |
| | | | DE | 2107586 A1 | 26-08-1971 |
| | | | FR | 2077827 A1 | 05-11-1971 |
| | | | GB | 1338436 A | 21-11-1973 |
| | | | NL | 7102030 A | 19-08-1971 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0846936 A